**Europäisches Patentamt**

**European Patent Office**

**Office européen des brevets**

(11) Numéro de publication : **0 517 615 A1**

(12) # DEMANDE DE BREVET EUROPEEN

(21) Numéro de dépôt : **92401575.3**

(22) Date de dépôt : **05.06.92**

(51) Int. Cl.⁵ : **B29C 45/14, B29C 45/16, A47C 7/16, A47C 5/12**

(30) Priorité : **07.06.91 FR 9106967**

(43) Date de publication de la demande : **09.12.92 Bulletin 92/50**

(84) Etats contractants désignés : **BE DE ES FR GB GR IT NL PT**

(71) Demandeur : **ALLIBERT S.A.**
**129, avenue Léon Blum**
**F-38100 Grenoble (FR)**

(72) Inventeur : **Fillon, Rolland**
**les Pénates**
**F-38760 Varces (FR)**

(74) Mandataire : **Sabatier, Marc**
**83, Avenue Foch**
**F-75116 Paris (FR)**

(54) Procédé de moulage d'un coussin apte à constituer un insert d'un siège, coussin ainsi obtenu et siège le comportant.

㊗ L'invention a pour objet un procédé pour l'obtention d'un tel coussin (15) obtenu à partir d'un matériau composite 3 bordé d'un cadre 8 au cours d'une première injection et pourvu d'un fond 14 réalisé sucessivement au cours d'une seconde injection pour constituer un insert amovible (15) apte à combler des zones vides d'un siège, correspondants à son assise et/ou son dossier. Le matériau 3 est pourvu à sa partie tournée vers le fond 14 d'un film (3c) adhésif à la chaleur entre une mousse 3b, recouverte par ailleurs de tissu 3a, et le fond 14 sur lequel adhère ledit matériau 3.

Application au mobilier de jardin.

FIG. 6

**EP 0 517 615 A1**

Jouve, 18, rue Saint-Denis, 75001 PARIS

La présente invention concerne un procédé de moulage pour l'obtention d'un coussin souple constituant en soi un insert amovible apte à constituer une assise ou un dossier destiné à s'insérer dans une zone vide d'une structure de siège. Elle concerne également un siège ainsi obtenu et plus particulièrement, mais non exclusivement un siège de jardin.

Effectivement dans ce type de matériel d'extérieur, généralement en matière plastique, se pose un problème de confort lié à la composition même du matériau le constituant.

En effet le plastique, s'il permet la réalisation de formes nouvelles et complexes tout en conférant à l'objet une certaine légèreté, présente l'inconvénient de glisser au contact des vêtements ou bien de provoquer une sudation excessive au contact direct avec la peau, étant donné le caractère imperméable du plastique.

Dans les deux cas cela procure une sensation désagréable pour l'utilisateur.

Pour cette raison, il est connu de revêtir ces sièges de coussins amovibles, en mousse recouverts de tissu, retenus au siège par l'intermédiaire de liens que l'on noue sur ses montants.

Cela représente l'inconvénient fastidieux de devoir nouer et dénouer ces coussins en cas de mauvais temps pour les protéger de la pluie par exemple ou lors de l'hivernage. Egalement un autre aspect fastidieux dans l'utilisation de ces coussins réside dans leur manque de stabilité sur le siège, car s'ils ne glissent pas par rapport aux vêtements, ils glissent en revanche par rapport au siège proprement dit.

Il est connu également de rapporter un coussin souple à l'intérieur d'un logement du siège, lequel logement constitue en fait une cuvette au fond duquel est collé le coussin.

Si cette technique résoud le problème du glissement, elle ne résoud pas celle de l'amovibilité du coussin proprement dit qui est lié de manière inamovible au fond du siège.

Ces différentes constatations ont conduit à imaginer un siège selon l'invention, dans lequel seraient ménagées des zones vides dans la zone de l'assise et/ou du dossier qui seraient elles-mêmes garnies de coussins amovibles se présentant sous la forme d'inserts encastrables dans les dites zones vides, conçus de manière à les rendre amovibles et résoudre ainsi tous les inconvénients précités. De plus, il résulte un avantage d'une telle conception, résidant dans l'allègement considérable de poids du siège et la diminution non moins considérable du volume de matière noble employée, nécessaire à un bel aspect externe du siège.

Dans ce but, l'invention concerne non seulement un siège ainsi défini mais également un procédé de fabrication par moulage de l'insert constitutif de l'assise ou du dossier.

A cet effet, ce procédé est remarquable par les étapes suivantes:

- Mise en place dans un moule d'un matériau à structure composite comprenant successivement : un revêtement externe de décor dirigé vers le fond du moule, une couche de mousse relativement souple de confort sur laquelle est collé le revêtement externe et un film en matière plastique collé sur la couche de mousse et dirigé vers la partie ouverte du moule.

- Fermeture du moule

- Découpe dans le moule du matériau à structure composite pour l'obtention d'une ébauche de coussin.

- Mise en compression par écrasement total de l'ébauche de coussin dans le moule par l'intermédiaire d'un pavé mobile.

- Injection d'une première matière thermoplastique exclusivement dans une zone périphérique du moule fermé pour former un cadre enveloppant, autour du bord écrasé de l'ébauche comprimé.

- Recul du pavé mobile selon une valeur prédéterminée.

- Injection successive d'une seconde matière thermoplastique dans un volume central supérieur du moule fermé, délimité d'une part par le pavé mobile en recul et d'autre part par le film en matière plastique collé sur la mousse, pour constituer un fond rigide en liaison avec le cadre préalablement injecté, lequel fond adhère intimement avec ledit film du matériau composite formant coussin pour constituer un insert monobloc indissociable.

- Ouverture du moule

- Ejection de l'insert formant coussin.

D'autres caractéristiques apparaîtront au cours de la description qui va suivre, donnée à titre d'exemple, et effectuée en regard des dessins annexés sur lesquels :

Les figures 1 à 3 représentent schématiquement les étapes successives du procédé selon l'invention pour l'obtention d'un insert formant coussin dans lesquelles figures, les sous figures représentent :

- A : un moule fermé

- B : une partie de moule en coupe

- C : une vue en plan de l'insert au stade correspondant à l'étape concernée

- D : une vue en coupe transversale de l'insert selon C

- E : une vue en coupe longitudinale de l'insert selon C.

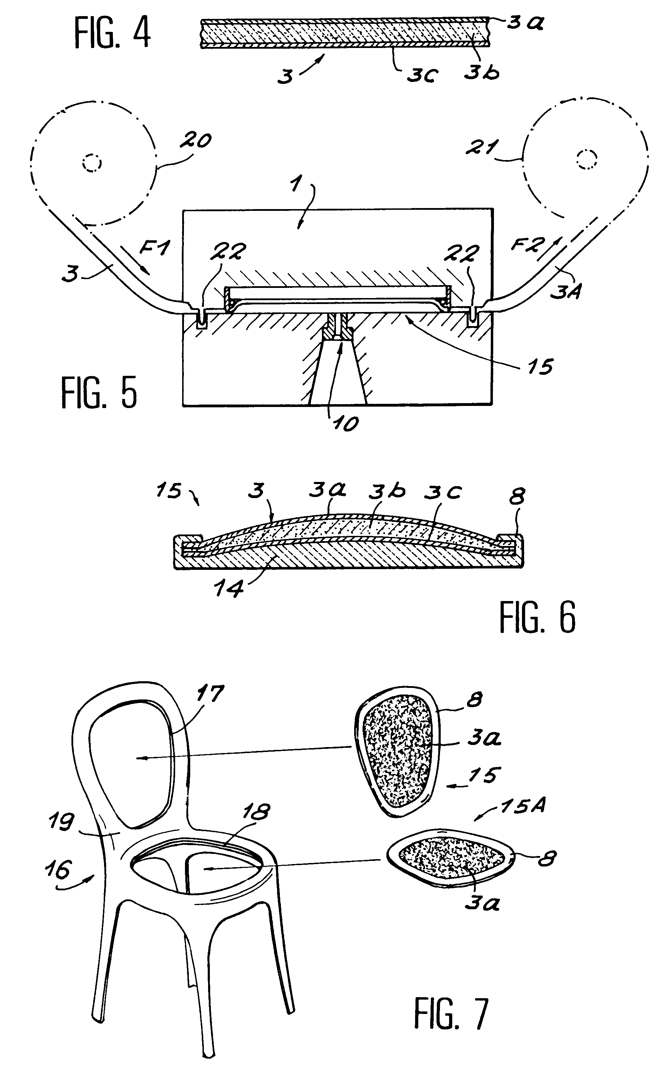

La figure 4 est une vue en coupe de la structure du matériau composite composant l'insert.

La figure 5 est une vue en coupe d'un moule et de son dispositif d'alimentation en matériau composite.

La figure 6 est une vue en coupe d'un insert formant coussin prêt à être disposé dans une zone vide d'une structure d'un siège.

La figure 7 est une vue en perspective éclatée d'un siège en cours de montage des inserts.

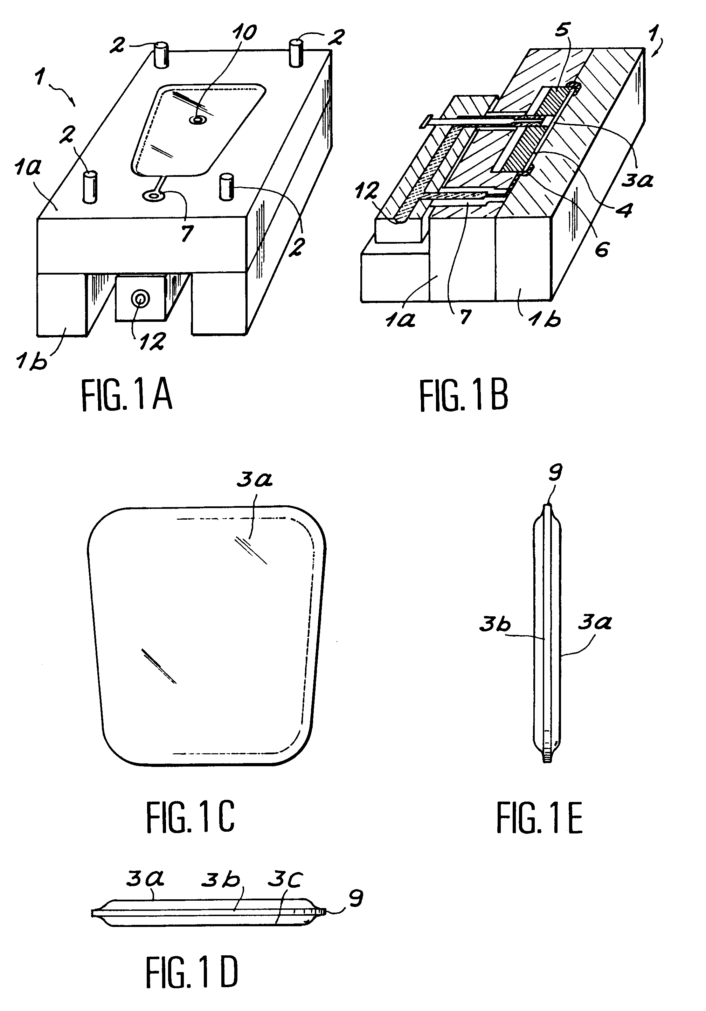

Le moule 1 désigné dans son ensemble sur les figures 1 à 3 est constitué de deux parties 1a et 1b fermées par des goujons 2 de manière connue en soi qui ne sera pas décrit ici.

Avant la fermeture du moule 1, on procède à la mise en place d'un matériau composite 3 sur sa partie inférieure 1b.

Ce matériau 3 comprend successivement ; un revêtement externe de décor 3a, en l'occurrence un tissu, qui sera dirigé vers le fond du moule 1 ; une couche de mousse 3b, relativement souple de confort sur laquelle est collé le revêtement externe 3a et enfin un film 3c en matière plastique collé sur la couche de mousse 3b et dirigé vers la partie ouverte du moule 1.

La mousse 1b est par exemple une mousse de polyuréthane à cellules ouvertes alors que le film est par exemple en polypropylène.

Après la fermeture du moule 1 on découpe à l'intérieur même de celui-ci, le matériau composite 3 pour l'obtention d'une ébauche 4 de coussin (fig. 1C,1D,1E).

Ensuite grâce à la pression d'un pavé mobile 5, on comprime par écrasement total l'ébauche 4 dont l'épaisseur se trouve réduite au maximum (fig. 1B).

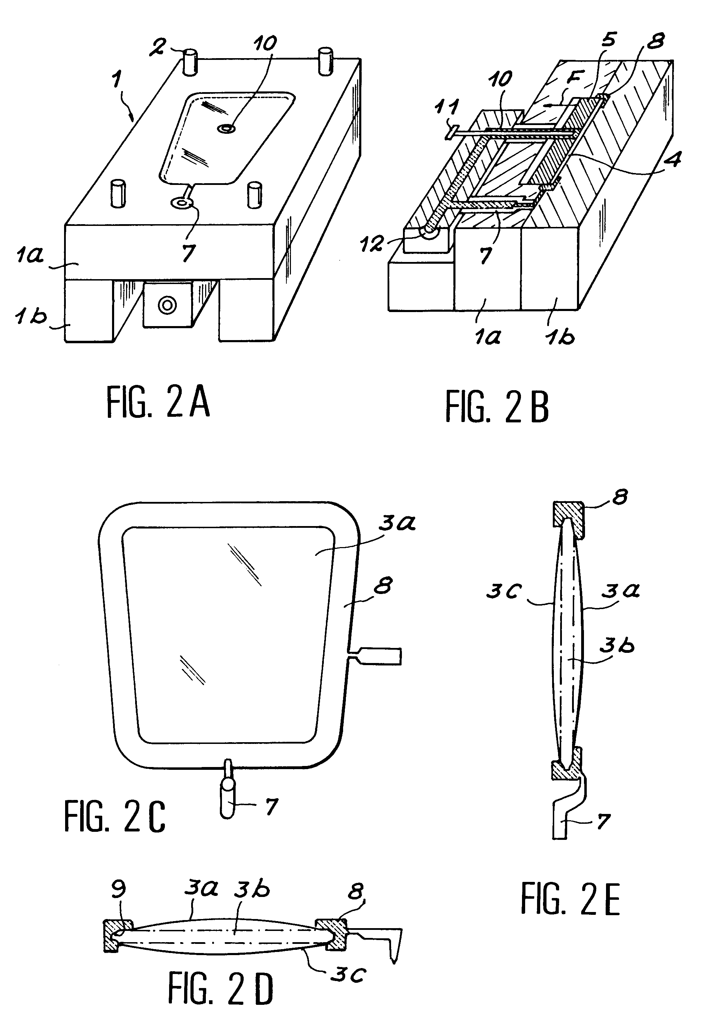

Comme le montrent les figures 1 à 3 la partie inférieure 1b du moule 1 comporte une gorge périphérique 6 dans laquelle est effectuée une première injection d'une matière thermoplastique par l'intermédiaire d'une buse d'injection latérale 7, de manière à former un cadre enveloppant 8 tout autour du bord écrasé 9 de l'ébauche comprimé 4. (fig 2B).

On fait ensuite reculer mécaniquement à l'aide de vérins, le pavé mobile 5 selon une valeur déterminée à l'avance, et l'on injecte successivement à la première, une seconde injection d'une matière thermoplastique par l'intermédiaire d'une seconde buse d'injection centrale 10 dont la commande est effectuée à partir d'un pointeau 11 amovible. L'alimentation des buses 7 et 10 s'effectuant à partir d'une buse principale 12.

Il est ainsi déterminé un volume central 13 à la partie supérieure du moule 1, délimité d'une part par le pavé mobile 5 en recul selon F et d'autre part par le film en matière plastique 3c collé sur la mousse 3b.

La seconde injection précitée, dans ce volume 13 permet l'obtention d'un fond rigide 14 venant en liaison naturelle avec le cadre 8 préalablement injecté et non totalement refroidi.

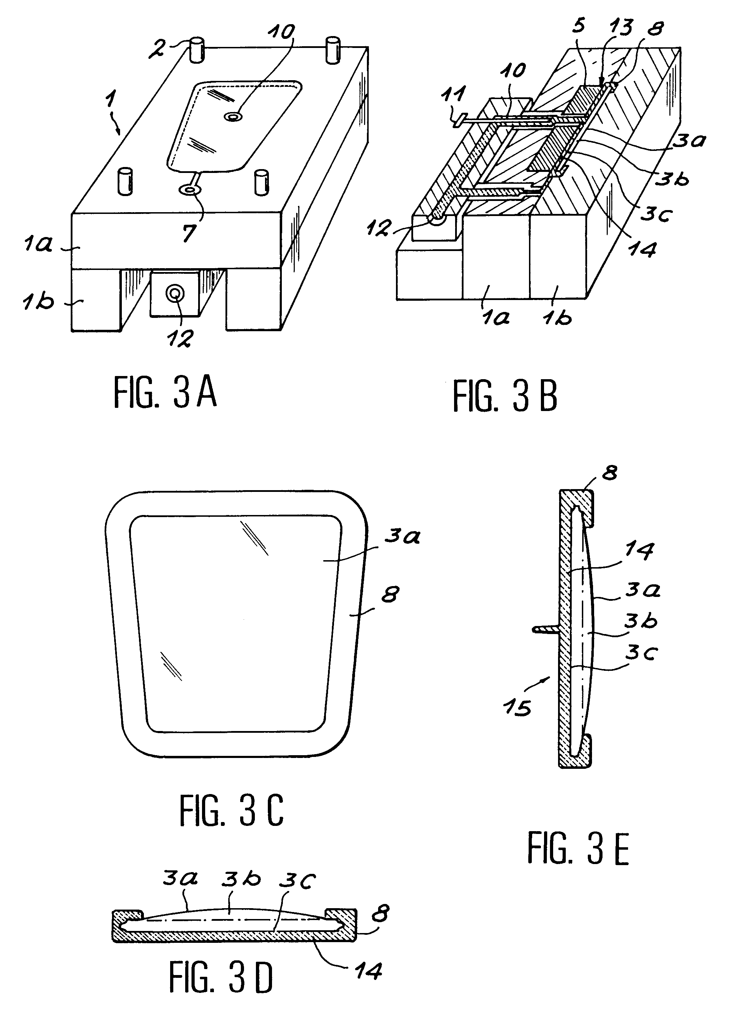

Le film 3c a non seulement le pouvoir de former écran à la migration de la matière thermoplastique du fond 14 lors de la seconde injection, mais il constitue avantageusement un adhésif entre ledit fond 14 et la mousse 3b, par fusion lors de ladite seconde injection (fig 3B).

Après ouverture du moule 1, on procède à l'éjection d'un insert formant coussin 15 ou 15A destiné à équiper une chaise 16 comportant des zones vides correspondantes 17, 18, respectivement obtenues dans une structure 19 obtenue au cours d'une même opération de moulage de matière plastique. Avantageusement, et pour une meilleure rentabilité de l'installation le matériau à structure composite 3 est conditionné en rouleau à partir d'une bobine distributrice 20 se déroulant pas à pas dans le sens F1 entre les parties 1a et 1b, au moment de l'ouverture du moule 1, entre chaque cycle de fabrication d'un coussin 15. L'entraînement de la bande de matériau 3 s'effectue selon F2 par enroulement de la partie découpée 3A constituant une chute, sur une seconde bobine enrouleuse motrice 21.

Pendant l'opération de moulage, la bande de matériau 3 est maintenue latéralement par des aiguilles de maintien 22.

Il est également à noter que le cadre 8 comporte des moyens d'ancrage (non représentés) obtenus de moulage et coopèreront avec des moyens correspondants (non représentés) prévus sur une feuillure des zones vides 17,18.

**Revendications**

1) Procédé de moulage pour l'obtention d'un coussin souple constituant en soi un insert amovible apte à constituer une assise ou un dossier destiné à s'insérer dans une zone vide d'une structure de siège remarquable par les étapes suivantes :
- Mise en place dans un moule(1) d'un matériau à structure composite(3) comprenant successivement : un revêtement externe de décor(3a) dirigé vers le fond du moule(1), une couche de mousse(3b) relativement souple de confort sur laquelle est collé le revêtement externe et un film en matière plastique collé sur la couche de mousse et dirigé vers la partie ouverte du moule.
- Fermeture du moule(1)
- Découpe dans le moule(1) du matériau à structure composite(3) pour l'obtention d'une ébauche(4) de coussin.
- Mise en compression par écrasement total de l'ébauche de coussin(4) dans le moule(1) par l'intermédiaire d'un pavé mobile(5).
- Injection(7) d'une première matière thermoplastique exclusivement dans une zone périphérique(6) du moule fermé (1) pour former un cadre enveloppant(8) autour du bord écrasé(9) de l'ébauche comprimé(4).
- Recul du pavé mobile(5) selon une valeur prédéterminée.
- Injection(10) successive d'une seconde matière thermoplastique dans un volume central(13) supérieur du moule fermé, délimité d'une part par le pavé mobile(5) en recul(F) et d'autre part par le film en matière plastique(3c) collé sur la mousse(3b), pour constituer un fond rigide(14) en liaison avec le cadre(8) préalablement injecté, lequel fond(14) adhère intimement avec ledit film(3c) du matériau composite(3) formant coussin pour constituer un insert monobloc indissociable(15,15A).

- Ouverture du moule(1)

- Ejection de l'insert formant coussin(15,15A).

**2)** Procédé selon la revendication 1 caractérisé en ce que le matériau à structure composite (3) est conditionné en rouleau (20) et déroulé pas à pas entre les deux parties (1a, 1b) ouvertes du moule (1) entre chaque cycle de fabrication d'un coussin (15), l'entrainement de la bande s'effectuant par enroulement de la partie découpée (3A) constituant une chute sur une bobine enrouleuse motrice (21).

**3)** Coussin (15) obtenu selon le procédé des revendications 1 ou 2 caractérisé en ce que le revêtement externe de décor du matériau à structure composite (3) est un tissu (3a) collé sur la mousse (3b).

**4)** Coussin (15) obtenu selon le procédé des revendications 1 ou 2 caractérisé en ce que la mousse (3b) du matériau à structure composite (3) est une mousse de polyuréthane à cellules ouvertes.

**5)** Coussin (15) obtenu selon le procédé des revendications 1 ou 2 caractérisé en ce que le film (3c) est un film en polypropylène apte à former écran à la migration de la matière thermoplastique du fond (14) lors de la seconde injection (10) et à constituer un adhésif par fusion entre ledit fond (14) et la mousse (3b).

**6)** Siège (16) caractérisé en ce qu'il est réalisé à partir d'une structure (19) dans laquelle des zones vides (17,18) ont été ménagées pour recevoir des inserts (15, 15A) formant coussins obtenus selon l'une des revendications précédentes.

**7)** Siège (16) selon la revendication 6 caractérisé en ce que sa structure (19) est obtenue par moulage de matière plastique au cours d'une même opération et comporte des moyens d'ancrage des coussins (15,15A) coopérant avec leur cadre périphérique (8).

FIG. 1A

FIG. 1B

FIG. 1C

FIG. 1E

FIG. 1D

FIG. 2 A

FIG. 2 B

FIG. 2 C

FIG. 2 E

FIG. 2 D

FIG. 3 A

FIG. 3 B

FIG. 3 C

FIG. 3 E

FIG. 3 D

FIG. 4

FIG. 5

FIG. 6

FIG. 7

))) **Office européen**
**des brevets**

**RAPPORT DE RECHERCHE EUROPEENNE**

Numero de la demande

EP 92 40 1575

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 266 742 (S. HETTINGA) * Colonne 4, lignes 1-29; figures 1-3,6,7 * --- | 1,3 | B 29 C 45/14 B 29 C 45/16 A 47 C 7/16 A 47 C 5/12 |
| A | PATENT ABSTRACTS OF JAPAN, vol. 12, no. 183 (M-703)[3030], 28 mai 1988; & JP-A-62 294 522 (NIPPON SEKISOO KOGYO) 22-12-1987 * Abrégé * --- | 1,3-5 | |
| A | PATENT ABSTRACTS OF JAPAN, vol. 11, no. 241 (M-614)[2688], 7 août 1987; & JP-A-62 053 811 (INOUE MTP CO., LTD) 09-03-1987 * Abrégé * --- | 1,3,4 | |
| A | EP-A-0 326 408 (MITSUI PETROCHEMICAL IND.) * Page 4, ligne 3 - page 5, ligne 14; figures 1A-D * --- | 1,3,5 | |
| A | EP-A-0 100 276 (DURET & FILS) * Le document en entier * --- | 1,3 | **DOMAINES TECHNIQUES RECHERCHES (Int. Cl.5)** B 29 C A 47 C |
| A | US-A-4 024 652 (BRILLI) * Colonne 2, lignes 12-16; colonne 3, lignes 42-55; figures 4,5 * --- | 1 | |
| A | FR-A-2 450 686 (SOC. QUILLERY) * Page 2, ligne 24 - page 3, ligne 22; figure 1 * --- | 2 | |
| A | FR-A-2 208 289 (DAVID) * Le document en entier * ----- | 6,7 | |

Le présent rapport a été établi pour toutes les revendications

| Lieu de la recherche | Date d'achèvement de la recherche | Examinateur |
|---|---|---|
| LA HAYE | 31-08-1992 | BOLLEN J.A.G. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

EPO FORM 1503 03.82 (P0402)